# EUROPEAN PATENT SPECIFICATION

(11) **EP 3 354 505 B1**
(45) Date of publication and mention of the grant of the patent: **06.07.2022**
(21) Application number: 18153545.1
(22) Date of filing: 25.01.2018
(51) Int. Cl.: B60K 6/485, B60W 30/18, F02N 11/00, B60W 20/14

(54) **ELECTRICAL POWER SUPPLY FOR AN URBAN BUS**
ELEKTRISCHE ENERGIEVERSORGUNG FÜR EINEN STÄDTISCHEN BUS
ALIMENTATION ÉLECTRIQUE POUR BUS URBAIN

(30) Priority: 25.01.2017 IT 201700007795
(43) Date of publication of application: 01.08.2018
(73) Proprietor: IVECO FRANCE S.A.S., 69200 Vénissieux (FR)
(72) Inventor: GENDRE, Guy, 69003 LYON (FR)
(74) Representative: Bongiovanni, Simone

(56) References cited:
- EP-A1- 2 431 215
- DE-A1- 2 530 130
- DE-A1-102015 102 931
- DE-U1-202012 001 767
- US-A1- 2009 320 715
- US-A1- 2014 045 648

## Description

### PRIORITY CLAIM

The present invention relates to a vehicle configured as urban bus, for road public transport, comprising an electric power supply system.

Power supply systems for urban buses are known by documents DE102105102931 A1, US2014045648 A1 or DE2530130 A1.

Combustion engines are started with an electric starter powered by batteries. The batteries also provide the power needed for supplying the various utilities (lighting, electronic control unit, etc.) when the engine is not running.

After starting the engine, the current for the supply of different utilities is provided by alternators that are driven by the combustion engine.

To prevent the rundown of the battery when the engine is running, the direct voltage supplied by the alternator is greater than the battery voltage. Therefore there is a current flow between the generators and the batteries which thus also become users of electrical power (the electrical power supplied to the batteries is partially converted into heat).

The present invention is intended to prevent the batteries from consuming electrical power, while in use.

To this end, this invention provides a vehicle configured as urban bus for road public transport comprising an electrical power supply system for public transport road vehicles according to the appended set of claims.

It is an advantage that the electronic control unit is designed to measure the opening time of the electronic switch after starting the engine: the electronic control unit is designed to inform the bus driver of the need to charge the batteries with a charger when said opening time is greater than a certain threshold value.

Other features and advantages of the invention will become apparent from reading the description below of a particular embodiment, provided by way of non-limiting example, with reference to the attached diagram.

In the diagram, numeral 1 represents an electrical power supply system for urban buses (the bus is not shown).

The system 1 comprises an electrical power line 3 of the vehicle (BUS) for supplying power to various electrical utilities(lighting, heating, electronic control unit, door openings etc.); alternators 5a, ... 5n that are actuated by the combustion engine itself 7 to produce electrical energy that is supplied to the electrical power line 3, for supplying power to various electrical utilities when the engine 7 is running; and the electric batteries (8) for supplying power to the starter 9, for starting the combustion engine 7. The electric batteries 8 are also provided for supplying power to the electrical utilities when the engine 7 is not running.

In accordance with the invention, an electronic switch 10 is provided, which is placed between the batteries 8 and the electronic power line 3.

The electronic switch 10 is controlled by an electronic control unit 11 of the electronic switch that receives signals ω, which represent the operational state of the engine (the engine is running or the engine is not running) and the decelerations β of the bus.

The electronic control unit 11 is is configured such that it opens the electronic switch 10 when the engine 7 is running and to ensure that no deceleration has been detected β (insufficient deceleration) in order to prevent the electrical energy in the power line 3 from being supplied to the batteries which would otherwise become users of the electrical energy. As a result, the electrical energy produced by the alternators 5 is saved and fuel consumption by the engine 7 is reduced.

The electronic control unit 11 is configured such that it closes the electronic switch 10 when the engine 7 is not running, so as to allow the engine 7 to start with the power produced by the batteries 8.

The electronic control unit 11 is configured such that it closes the electronic switch 11 when the detected deceleration is sufficient (for example the deceleration is above a certain threshold value), so as to recover the electrical energy produced by the alternators 5 that act as electrical energy generators during braking. In the deceleration phase of the bus, the engine acts as a brake, often called "engine braking". Consequently, the electrical energy produced by the alternators 5 is partly recovered and fuel consumption by the engine 7 is reduced.

The electronic control unit 11 is designed to measure the opening time of the electronic switch 10 after starting the engine 7. The electronic control unit 11 is designed to inform the bus driver of the need to recharge the batteries 8 with a charger, when said opening time is greater than a certain threshold value. This may be, for example, indicative of the batteries reaching the minimum energy required to start the engine, in case the engine stops unexpectedly.

The number of alternators 5a, 5b ... 5n may be based on the capacity of the batteries to become sufficiently charged during braking and to avoid the need to connect the batteries to a charger in order to start the starter.

Alternatively, the number of alternators 5a, 5b ... 5n, is based on the capacity of the batteries to become sufficiently charged during braking and to allow the starter to start with a charger connected to the power line 3.

According to the invention, each alternator 5 is equipped with a controlled rectifier that allows the output voltage of the rectifier to be adapted to the measured voltage on the terminals of the batteries 11. Each controlled rectifier is designed to reduce the output voltage when the electronic switch 10 is open, thus reducing the power consumed by the various utilities connected to the power line 3.

Each controlled rectifier is also designed to increase the output voltage when the electronic switch 10 is closed to improve the energy recovery.

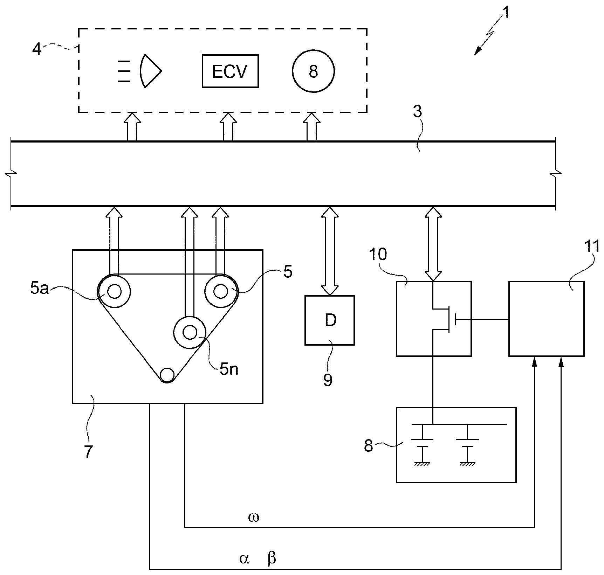

## Claims

1. Vehicle configured as urban bus, for road public transport, comprising an electrical power supply system which comprises:
- an electrical power line (3) configured to supply electric power to a plurality of electrical utilities of said vehicle;
- a plurality of alternators (5) that are actuated by a combustion engine (7) of said vehicle to produce electrical energy which is supplied to said electrical power line for supplying power to a plurality of electrical utilities when the engine (7) is running;
- electric batteries (8) for supplying power to a starter (9) upon starting the combustion engine (7), said electric batteries (11) also being provided for supplying power to said plurality of electrical utilities when the engine (7) is not running,
wherein said electrical power supply system comprises:
- an electronic switch (10) that is placed between the batteries (8) and the electronic power line (3);
- an electronic control unit (11) of the electronic switch (10) that receives signals representing the operational state of the engine (7) and the decelerations of the vehicle;
wherein:
- said electronic control unit (11) is configured such that it opens the electronic switch (10) when the engine (7) is running and no deceleration has been detected, in order to prevent the electrical energy in the power line (3) from being supplied to the batteries, which otherwise would become users of the electrical energy;
- said electronic control unit is configured such that it closes the electronic switch (T) when the engine is not running so as to allow the engine to be started with the energy supplied by the batteries; and
- said electronic control unit is further configured such that it closes the electronic switch (10) when the detected deceleration is enough to recover the electrical energy produced by the alternators (5) that act as electrical energy generators during braking of the vehicle,
and wherein:
- each alternator is provided with a controlled rectifier, which allows the output voltage of the rectifier to be adapted to the measured voltage on the terminals of the batteries;
- any such controlled rectifier is designed to reduce said output voltage, when the electronic switch (10) is opened, thus reducing the power consumed by the various utilities connected to the power supply line (3) while each said controlled rectifier is designed to increase said output voltage when the electronic switch (10) is closed, to increase the energy recovery,
and wherein the electronic control unit (11) is designed to measure the opening time of the electronic switch (10) after starting the engine, the electronic control unit being designed to inform the vehicle driver of the need to charge the batteries with a charger when said opening time is greater than a certain threshold value.

2. Vehicle according to claim 1, wherein the number of alternators (5a, 5b ... 5n), is based on the capacity of the batteries to become sufficiently charged during braking and to avoid the need to connect the batteries to a charger for actuating the starter.

3. Vehicle according to claim 1, wherein the number of alternators (5a, 5b ... 5n), is based on the capacity of the batteries to become sufficiently charged during braking and to allow the starter to be actuated with a charger connected to the power line (3).

## Patentansprüche

1. Fahrzeug, konfiguriert als Stadtbus für den Strassenpersonentransport, umfassend ein elektrisches Energieversorgungssystem, das umfasst:
- eine elektrische Energieleitung (3), die so konfiguriert ist, dass eine Vielzahl an elektrischen Verbrauchern des Fahrzeugs mit Strom versorgt werden kann;
- eine Vielzahl an Lichtmaschinen (5), angetrieben von einem Verbrennungsmotor (7) des Fahrzeugs, um elektrische Energie zu produzieren, die der elektrischen Stromleitung zur Verfügung gestellt wird, um eine Vielzahl an Verbrauchern mit Strom zu versorgen, wenn der Motor (7) läuft;
- Elektrische Batterien (8) zur Stromversorgung eines Anlassers (9), wenn der Verbrennungsmotor (7) des Fahrzeugs gestartet wird, wobei die elektrischen Batterien (8) ferner dazu vorgesehen sind, eine Vielzahl an elektrischen Verbrauchern mit Strom zu versorgen, wenn der Motor (7) nicht läuft,
wobei das elektrische Energieversorgungssystem umfasst:
- einen elektronischen Schalter (10), der zwischen den Batterien (8) und der elektrischen Energieleitung (3) angeordnet ist;
- eine elektronische Steuereinheit (11) des elektronischen Schalters (10), die Signale empfängt, die dem Betriebszustand des Motors (7) und der Geschwindigkeitsabnahme des Fahrzeugs entsprechen;
wobei:
- die elektronische Steuereinheit (11) so konfiguriert ist, dass der elektronische Schalter (10) geöffnet wird, sofern der Motor (7) läuft und keine Geschwindigkeitsabnahme erkannt wurde, um zu verhindern, dass die elektrische Energie in der elektrischen Energieleitung (3) den Batterien zugeleitet wird, die sonst zu Nutzern der elektrischen Energie würden;
- die elektronische Steuereinheit so konfiguriert ist, dass der elektronische Schalter (10) geschlossen wird, wenn der Motor nicht läuft, um ein Starten des Motors durch die in den Batterien gespeicherte Energie zu ermöglichen; und
- die elektronische Steuereinheit ferner so konfiguriert ist, dass der elektronische Schalter (10) geschlossen wird, sofern die erkannte Geschwindigkeitsabnahme groß genug ist, um die von den Lichtmaschinen (5) erzeugte elektrische Energie zurückzugewinnen, indem die Lichtmaschinen (5) beim Bremsen des Fahrzeugs als Generatoren agieren,
und wobei
- jede Lichtmaschine mit einem gesteuerten Gleichrichter versehen ist, was eine Anpassung der Ausgangsspannung des Gleichrichters an die gemessene Spannung an den Batteriepolen ermöglicht;
- jeder gesteuerte Gleichrichter dazu ausgebildet ist, diese Ausgangsspannung zu reduzieren, wenn der elektronische Schalter (10) geöffnet ist, wodurch die Leistung, die von den verschiedenen an die elektrische Energieleitung (3) angebundenen Verbrauchern konsumiert wird, reduziert wird, während jeder der gesteuerten Gleichrichter dazu ausgebildet ist, die Ausgangsspannung zu erhöhen, wenn der elektronische Schalter (10) geschlossen ist, um die Energierückgewinnung zu erhöhen,
und wobei die elektronische Steuereinheit (11) dazu ausgebildet ist, die Öffnungszeit des elektronischen Schalters (10) nach dem Starten des Motors zu messen, und die elektronische Steuereinheit dazu ausgebildet ist, den Fahrzeugführer über die Notwendigkeit zu informieren, die Batterien mit einem Ladegerät zu laden, wenn die Öffnungszeit einen bestimmten Schwellwert übersteigt.

2. Fahrzeug nach Anspruch 1, wobei die Anzahl der Lichtmaschinen (5a, 5b ... 5n) auf der Kapazität der Batterien basiert, um diese ausreichend während des Bremens zu laden, und um die Notwendigkeit zu vermeiden, die Batterien für die Betätigung des Anlassers mit einem Ladegerät zu verbinden.

3. Fahrzeug nach Anspruch 1, wobei die Anzahl der Lichtmaschinen (5a, 5b ... 5n) auf der Kapazität der Batterien basiert, um diese ausreichend während des Bremens zu laden, und um eine Bestätigung des Anlassers zu ermöglichen, wenn ein Ladegerät an die elektrische Energieleitung (3) angeschlossen ist.

## Revendications

1. Véhicule configuré comme un bus urbain, pour le transport public routier, comprenant un système d'alimentation électrique qui comprend :
- une ligne de courant électrique (3) configurée pour fournir du courant électrique à une pluralité d'équipements électriques dudit véhicule ;
- une pluralité d'alternateurs (5) qui sont actionnés par un moteur (7) à combustion dudit véhicule pour produire de l'énergie électrique qui est fournie à ladite ligne de courant électrique pour fournir du courant à une pluralité d'équipements électriques lorsque le moteur (7) tourne ;
- des batteries (8) électriques pour fournir du courant à un démarreur (9) lors du démarrage du moteur (7) à combustion, lesdites batteries (11) électriques étant également prévues pour fournir du courant à ladite pluralité d'équipements électriques lorsque le moteur (7) ne tourne pas,
dans lequel ledit système d'alimentation électrique comprend :
- un commutateur électronique (10) qui est placé entre les batteries (8) et la ligne de courant électronique (3) ;
- un bloc de commande électronique (11) du commutateur électronique (10) qui reçoit des signaux représentant l'état de fonctionnement du moteur (7) et les ralentissements du véhicule ;
dans lequel :
- ledit bloc de commande électronique (11) est configuré de telle sorte qu'il ouvre le commutateur électronique (10) lorsque le moteur (7) tourne et qu'aucun ralentissement n'a été détecté, afin d'empêcher l'énergie électrique dans la ligne de courant (3) d'être fournie aux batteries, qui deviendraient sinon des utilisateurs de l'énergie électrique ;
- ledit bloc de commande électronique est configuré de telle sorte qu'il ferme le commutateur électronique (T) lorsque le moteur ne tourne pas de façon à permettre au moteur de démarrer avec l'énergie fournie par les batteries ; et
- ledit bloc de commande électronique est en outre configuré de telle sorte qu'il ferme le commutateur électronique (10) lorsque le ralentissement détecté est suffisant pour récupérer l'énergie électrique produite par les alternateurs (5) qui servent de générateurs d'énergie électrique durant le freinage du véhicule,
et dans lequel :
- chaque alternateur est pourvu d'un redresseur contrôlé, qui permet à la tension de sortie du redresseur d'être adaptée à la tension mesurée sur les bornes des batteries ;
- un quelconque redresseur contrôlé de ce type est conçu pour réduire ladite tension de sortie, lorsque le commutateur électronique (10) est ouvert, réduisant par conséquent le courant consommé par les divers équipements connectés à la ligne d'alimentation (3) tandis que chaque dit redresseur contrôlé est conçu pour augmenter ladite tension de sortie lorsque le commutateur électronique (10) est fermé, pour augmenter la récupération d'énergie,
et dans lequel le bloc de commande électronique (11) est conçu pour mesurer le temps d'ouverture du commutateur électronique (10) après le démarrage du moteur, le bloc de commande électronique étant conçu pour informer le conducteur de véhicule du besoin de charger les batteries avec un chargeur lorsque ledit temps d'ouverture est plus grand qu'une certaine valeur seuil.

2. Véhicule selon la revendication 1, dans lequel le nombre d'alternateurs (5a, 5b... 5n) est basé sur la capacité des batteries à devenir suffisamment chargées durant le freinage et à éviter le besoin de connecter les batteries à un chargeur pour actionner le démarreur.

3. Véhicule selon la revendication 1, dans lequel le nombre d'alternateurs (5a, 5b... 5n) est basé sur la capacité des batteries à devenir suffisamment chargées durant le freinage et à permettre au démarreur d'être actionné avec un chargeur connecté à la ligne de courant (3) .
